# EUROPEAN PATENT APPLICATION

(11) **EP 2 333 722 A1**
(43) Date of publication of application: **15.06.2011**
(21) Application number: 10172611.5
(22) Date of filing: 12.08.2010
(51) Int. Cl.: G06T 7/60

(54) **System and method for automatic detection of tip plane on 3D detailed ear impressions**

(30) Priority: 05.11.2009 US 258260 P; 10.08.2010 US 853356
(71) Applicant: Siemens Corporation, Iselin, NJ 08830 (US)
(72) Inventor: Melkisetoglu, Rupen, Princeton, NJ 08540 (US); Li, Gang, St. Davids, PA 19087 (US); Fang, Tong, Morganville, NJ 07751 (US)
(74) Representative: Wheatley, Alison Clare

(57) **Abstract**

A method for detecting the tip plane in digitized 3D ear impressions includes receiving a digitized mesh representation of an undetailed 3D ear impression and a digitized mesh representation of a detailed 3D ear impression, finding (31) faces on the detailed ear impression mesh that are modified with respect to corresponding faces on the undetailed ear impression mesh, forming (32) regions of connected modified faces, eliminating (33) those regions that are not around an ear canal, and creating (34) a tip plane by averaging vertices of those remaining faces in a tip region of the detailed impression to find a mass center point, averaging face normal vectors over all faces in the tip region to find an average face normal, and extending the average face normal from the mass center point to find the intersection on the detailed ear impression.

## Description

### Cross Reference to Related United States Applications

This application claims priority from "Automatic Detection of Tip Plane on 3D Detailed Impressions ", U.S. Provisional Application No. 61/258,260 of Melkisetoglu, et al., filed November 5, 2009, the contents of which are herein incorporated by reference in their entirety.

### Technical Field

This disclosure is directed to detecting the tip of 3D detailed ear impressions in digital medical images.

### Discussion of the Related Art

The understanding and analysis of complex surfaces require certain level of abstraction, where redundant details are eliminated, by more emphasis on the occurrence of rare events and informative features that are distinctive of a shape, yet sufficiently consistent among its realizations. The resulting abstraction captures the essence of the geometry in the form of morphological descriptors that drive surface classification and indexing. In other applications, they are used to guide registration and segmentation algorithms, and to ensure the integrity of the constituent features during surface denoising.

The hearing aid manufacturing industry is constantly increasing the efficiency of the production process by taking advantage of the Computer Aided Detailing and Modeling tools. Digitized processing of the hearing aid impressions combined with advanced visualization and analysis techniques have become widely used in the industry and most manufacturers have switched their processes from analog to digital. The switch is significant in hearing aid manufacturing, and aims at eliminating the tedious manual detailing and modeling procedures. Hearing aids are generally custom made, designed to fit the ear(s) of a patient with ease and comfort. Ear impressions are first acquired by an audiologist by inserting a mold through an injector deep into the ear canal. The mold is allowed to settle to the interior of the exterior and outer ear, before the impression is removed. The impression is then subject to a 3D digital scan to create a 3D image of the impression, where the impression is represented by a surface mesh. During the detailing and modeling process, an operator manually carries out several modifications on the reconstructed surface, to design the end product: a hearing aid that conveniently fits in the ear with all its associated electronics. But even in a digitized environment, the hearing aid shell design is highly dependent on the operator input. To minimize the operator error, rule based detailing and modeling strategies have been developed with the help of feature detection techniques to be used on generic surfaces, such as 3D ear impressions.

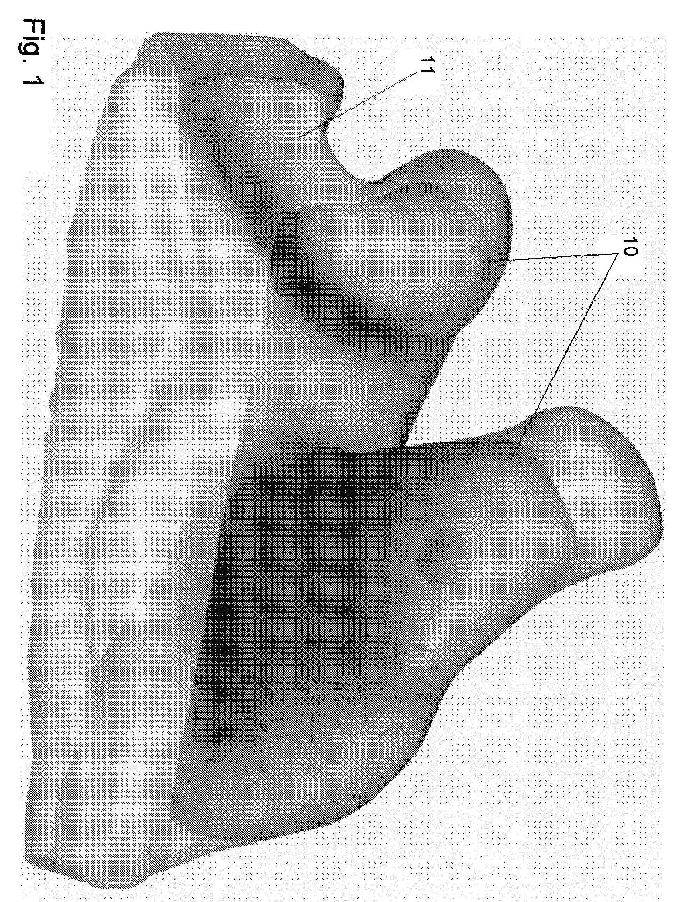

One useful feature is the tip plane of the 3D detailed ear impression surface, which is used in hearing aid manufacturing system, especially during the automation of modeling process of the detailed impressions. Detailing here refers to a set of geometric operations which are applied to an undetailed impression surface, such as tapering, rounding, cutting, extension etc. The initial purpose of detailing is to provide a smooth and esthetic shape to the impression while preserving the hearing aid specific constraints. FIG. 1 depicts a detailed impression 10 and an undetailed 11 impression visualized together.

The tip plane is used to automate various modeling operations, such as wax guard cutting plane definition, vent path tip point identification, and receiver hole point positioning. These steps need the tip plane information to set some manipulators around the tip region. For example, the flip wax guard is a planar cut applied parallel to the tip plane with a certain offset, the vent integration step needs to find an automatic vent path by positioning the vent inlet and outlet to the tip and bottom of the impression respectively, the receiver hole also needs to be positioned somewhere on this tip region.

### Summary of the Invention

Exemplary embodiments of the invention as described herein generally include methods and systems for identifying the tip plane of a 3D ear impression after detailing, where the ear impression is represented in a digital medical image.

According to an aspect of the invention, there is provided a method for detecting the tip plane in digitized 3D ear impressions, including receiving a digitized mesh representation of an undetailed 3D ear impression and a digitized mesh representation of a detailed 3D ear impression, finding faces on the detailed ear impression mesh that are modified with respect to corresponding faces on the undetailed ear impression mesh, forming regions of connected modified faces, eliminating those regions that are not around an ear canal, and creating a tip plane by averaging vertices of those remaining faces in a tip region of the detailed impression to find a mass center point, averaging face normal vectors over all faces in the tip region to find an average face normal, and extending the average face normal from the mass center point to find the intersection on the detailed ear impression.

According to a further aspect of the invention, the method includes finding the tip plane normal from the intersection of the average face normal with the detailed ear impression, where the tip plane is the plane normal to the tip plane normal.

According to a further aspect of the invention, the digitized mesh representation of the undetailed 3D ear impression and the digitized mesh representation of the detailed 3D ear impression each comprises a plurality of vertices that define a plurality of triangular faces.

According to a further aspect of the invention, finding modified faces on the detailed ear impression comprises adding new vertices to the undetailed ear impression mesh, measuring distances between vertices of the detailed ear impression mesh and vertices of the undetailed ear impression mesh, finding a minimum distance between each face of the undetailed ear impression mesh and the each face of the detailed ear impression mesh, and classifying those faces whose minimum distance is greater than a pre-determined threshold as modified faces.

According to a further aspect of the invention, eliminating those regions that are not around an ear canal includes providing a tip point of the detailed ear impression mesh, providing a bottom plane center point of the detailed ear impression mesh, calculating a first distance between the tip point and the bottom plane center point, and for each region, calculating a mass center point for each face in the region by averaging all vertices of all faces in the region, calculating a second distance between the mass center point and the bottom plane center point, and adding the region of connected modified faces to a new region of connected modified faces if the second distance is greater than a product of the first distance and a predefined constant. The new region of connected modified faces is included in a new set of regions of connected modified faces.

According to a further aspect of the invention, the method includes, for each region in the new set of regions, and for each face in each region, calculating a face center point of each face, calculating a third distance between the face center point and the the bottom plane center point, and removing a region from the new set of regions if the third distance is less than a product of the first distance and a predefined constant.

According to a further aspect of the invention, forming regions of connected modified faces comprises, for each modified face, selecting a current modified face, finding those modified faces that are neighbors of the current modified face, and adding the neighboring modified faces to a face set containing the current face.

According to another aspect of the invention, there is provided a method of detecting the tip plane in digitized 3D ear impressions, including receiving a digitized mesh representation of an undetailed 3D ear impression and a digitized mesh representation of a detailed 3D ear impression, where each mesh representation comprises a plurality of vertices that define a plurality of triangular faces, adding new vertices to the undetailed ear impression mesh, measuring distances between vertices of the detailed ear impression mesh and vertices of the undetailed ear impression mesh, finding a minimum distance between each face of the undetailed ear impression mesh and the each face of the detailed ear impression mesh, classifying those faces whose minimum distance is greater than a pre-determined threshold as modified faces, forming regions of connected modified faces, eliminating those regions that are not around an ear canal, and finding the tip plane in a region of connected modified faces near the ear canal tip.

According to a further aspect of the invention, finding the tip plane in a region of connected modified faces near the ear canal tip includes creating a tip plane by averaging vertices of those remaining faces in a tip region of the detailed impression to find a mass center point, averaging face normal vectors over all faces in the tip region to find an average face normal, extending the average face normal from the mass center point to find the intersection on the detailed ear impression, and finding the tip plane normal from the intersection of the average face normal with the detailed ear impression, where the tip plane is the plane normal to the tip plane normal.

According to another aspect of the invention, there is provided a program storage device readable by a computer, tangibly embodying a program of instructions executable by the computer to perform the method steps for detecting the tip plane in digitized 3D ear impressions.

### Brief Description of the Drawings

FIG. 1 illustrates a detailed and an undetailed ear impression, according to an embodiment of the invention.
FIG. 2 illustrates a mapping between a detailed impression and an undetailed impression, according to an embodiment of the invention.
FIG. 3 is a flow chart of a method for identifying the tip plane of a detailed 3D ear impression, according to an embodiment of the invention.
FIGS. 4(a)-(h) illustrates some detection results, according to an embodiment of the invention.
FIG. 5 is a block diagram of an exemplary computer system for implementing a method for identifying the tip plane of a detailed 3D ear impression, according to an embodiment of the invention.

### Detailed Description of Exemplary Embodiments

Exemplary embodiments of the invention as described herein generally include systems and methods for identifying the tip plane of a detailed 3D ear impression. Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention.

As used herein, the term "image" refers to a surface representation. For example, surfaces commonly acquired in practical settings are represented with point clouds or discrete triangulated meshes. But the scope of embodiments of this invention is not limited to triangulated meshes, and also applies directly to other forms such as polygonal meshes, smooth surfaces represented in any parameterized form, and/or through any variant of splines. The image may also be an implicit representation of a surface, or be a surface embedded in a 3D volume in the form of voxelized data. The image may be acquired through a laser scanner, but CT scan, and/or other variants or other similar or new advanced technologies may be employed. Alternatively, the image may be a digitized representation of an object in a 3D space. The digitized representation may be a 2D digital photograph of the object, or the object may be represented by a polygonal mesh surface embedded in a 3D space. Typically the polygonal mesh surface is a triangulated mesh.

Due to the nature of a detailing operation, the planar area around the tip area of a detailed impression can be challenging to define. Hearing aid detailing software operators apply various operations on an undetailed impression to smooth it into detailed state to continue with modeling steps to create the finished impression. During the detailing, operators may also modify the canal region, possibly producing various planar regions around the canal area, or rounding the impression so that there is no obvious available planar area.

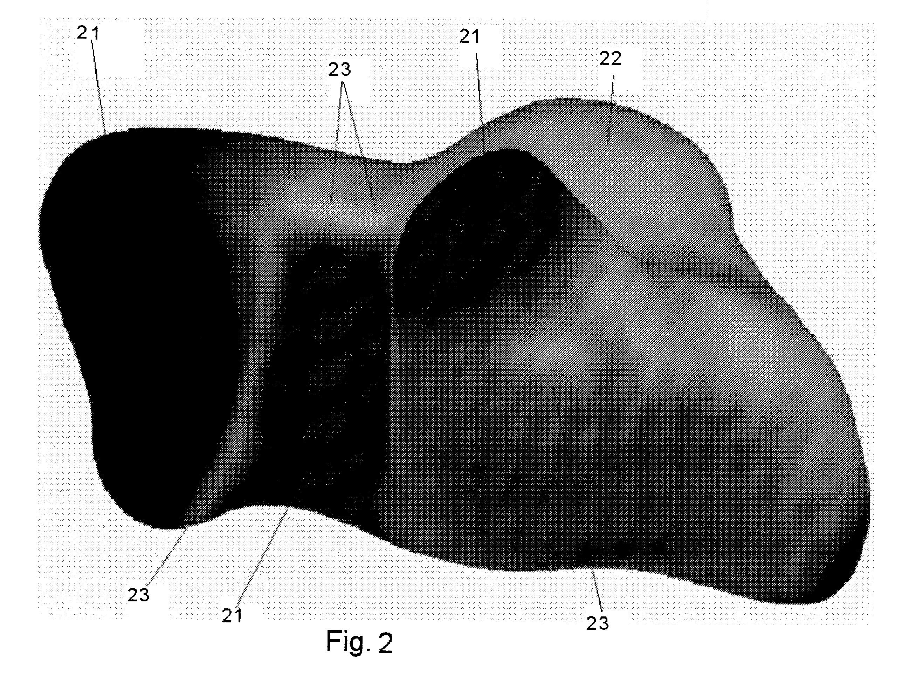

A method according to an embodiment of the invention does not assume that there is a planarity but rather that there will be some modifications on the detailed impression, which can be computed using the undetailed impression as reference. FIG. 2 illustrates a mapping between a detailed impression and an undetailed impression. Faces 21 are unmodified regions of the detailed impression compared to the undetailed one, faces 22 are regions where the impression is extruded in the surface while faces 23 are extruded out of the surface.

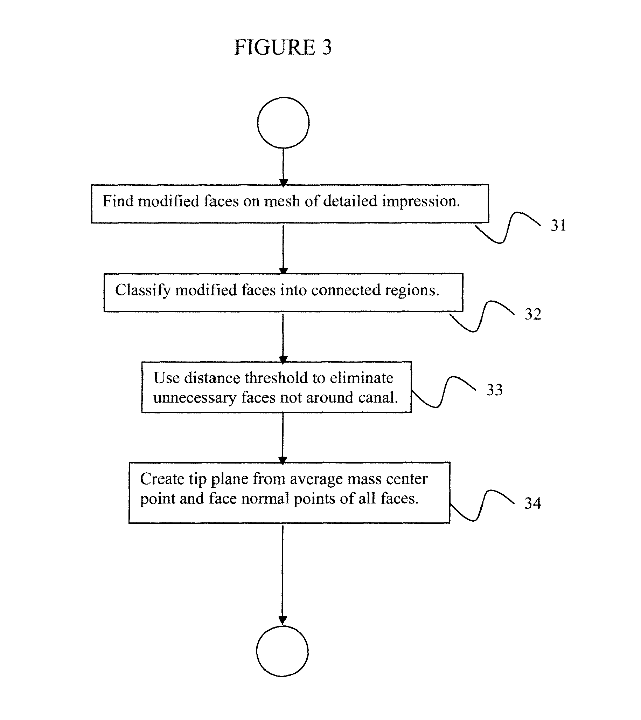

Let M be a digitized mesh representation of a 3D impression with V and F respectively denoting the sets of mesh vertices and triangular faces. The task is to find a modified tip area on detailed mesh M_{D} comparing it with the undetailed mesh, *Mᵤ.* A flow chart of an exemplary algorithm according to an embodiment of the invention for identifying the tip plane of a detailed 3D ear impression is presented in FIG. 3. A first step 31 of an algorithm according to an embodiment of the invention is to find the modified faces on *M_{D}* by measuring the distances between vertices of detailed and undetailed mesh. To increase the accuracy of the measurement, the undetailed mesh is densified by the addition of new vertices. Pseudo-code for an exemplary, non-limiting function to find the modified faces is presented in Algorithm 1. Algorithm 1 tries to find those faces of the detailed impression which are far away from the undetailed impression. If these faces are farther than a certain threshold, they are classified as modified faces.

Algorithm **1**: Calculation of modified faces
Input: Detailed impression *M_{D},* Undetailed impression *Mᵤ* Output: Modified face set *Fₘ* begin
   Get the face set of *Mᵤ: Fᵤ*
   foreach face in *Fᵤ* do
      Get vertices *V₁ V₂, V₃*
      Add new vertices between *(V₁-V₂), (V₁-V₃)* and *(V₂-V₃)* end
   Get the face set of *M_{D}: F_{D},* and new vertex set of *Mᵤ: Vᵤ* foreach face fᵢ in F_{D} do
      Get vertices of *f₁: Vᵢₗ, Vᵢ₂, Vᵢ₃* foreach vertex Vₖ in *Vᵤ* do
      *min_{d}* = minimum distance of |Vₖ-Vᵢₗ|, |*Vₖ-Vᵢ₂*|
| Vₖ-Vᵢ₃l
   end
   if *min_{d}* < *Thr* then
      Add fᵢ to *F_{M}*
      continue
   end
   end
end

At step 32, the newly found modified faces *F_{M}* may be classified into connected regions according to their neighborhood by applying a simple region growing algorithm. Algorithm 2 presents exemplary, non-limiting pseudo-code for a region growing algorithm according to an embodiment of the invention.

Algorithm **2**: Connected region calculation
Input: Modified face set *F_{M}*
Output: Array of connected face sets *F_{c}(i)* begin
   i=0
   foreach face fₖ in F_{M} do
      if fₖ is not in F_{c}(t), t =0, ..., i, then
         Add fₖ to *F_{c} (i)*
         if neighboring face set, F_{kN}, are in *F_{M}* then
            Grow region around *fₖ by* adding all faces of *F_{kN}* to *F_{c} (i)*
         i++
      end
   end
end

The output of Algorithm 2 is an array of face sets F_{c}, where each face set comprises a plurality of connected faces. After Algorithm 2, F_{c} will include several modified connected face regions which will represent all the modifications performed on the full undetailed impression to create the detailed impression. After finding the modified faces in Algorithm 2, Algorithm 3 finds the connected face regions, referred to herein as patches. There can be patches anywhere on the detailed impression due to the modifications, but the patches of interest are those close to the tip point of the undetailed impression. For tip plane detection, only regions which are close to the tip of the detailed impression are needed. Referring again to FIG. 3, a next step 33 uses a distance threshold to eliminate these unnecessary regions and keep only the modified regions around the canal area. Let the tip point *p_{T}* be the point farthest from the bottom opening plane, the bottom plane center *p_{B}* be the average point of the bottom opening contour, and the shell size be the distance from tip point to bottom plane center. The shell size can be used to define a distance threshold for eliminating patches. For example, one exemplary, non-limiting distance threshold is based on ShellSize/4, in which one eliminates those patches which are below (ShellSize/4). In addition, if any face violates this distance threshold, the patch containing that face is eliminated from consideration in the upcoming steps. Exemplary, non-limiting pseudo-code for a function that eliminate these unnecessary regions is presented in Algorithm 3. In Algorithm 3, the mass center point is the center of all the faces in the face set, calculated from the average of all vertices in the face set, and the face center is the center of a face, i.e., the average of the 3 vertices.

Algorithm **3**: Removal of unnecessary regions
Input: Tip point *p_{T}* of *M_{D},* bottom plane center p_{B} of M_{D}, Array of connected face sets *F_{c} (i)*
Output: New array of connected face sets *F_{CNew} (i)*
begin
   Calculate the distance between p_{T} and *p_{B}: dist_{TP}*
   foreach face set F_{c}( *i )* in F_{c} do
      Calculate the mass center point over all faces in
   the set: *P_{Mi} ,*
      Calculate the distance between *p_{Mi}* and *p_{B} : dist_{MiB}*
      if *dist_{MiB}* > *0.75* dist_{TP}* then
         add F_{c}( *i )* to *F_{CNew}*
      end
   end
   foreach face set *F_{CNew} (i)* in *F_{CNew}* do
      foreach face f in *F_{CNew} (i)* do
         Calculate the face center point of *f: p_{c}*
         Calculate the distance between p_{c} and *p_{B}, :*
      *dist_{CB}*
         if *dist_{CB}* < *0.75*dist_{TP}* then
            Remove *region F_{CNew} (i)* from F_{CNew}
         end
      end
   end
end

After Algorithm 3, there is a mesh region (set of faces), which is assumed to be the region at the tip of the mesh. One calculates the mass center of this region, which is the average of all vertices in the face set, and also an average face normal by summing all face normals of the faces in this region and normalizing the result. By extending this average normal from mass center point, one can find the intersection on the detailed impression. From that intersection point one can find the normal to the tip plane, which determines the tip plane. Thus, in a final step 34 of FIG. 3, the average face normal and mass center of *F_{CNew}* are calculated, and the calculated mass center points are intersected on the detailed impression by using the calculated average face normal. Exemplary, non-limiting pseudo-code for these steps is presented in Algorithm 44.

Algorithm 4: Final step to find the tip plane
Input: Detailed impression M_{D}, New array of connected face sets *F_{CNew}*
Output: Tip plane P_{T}.
begin
   Calculate the average mass center point of all faces in
*F_{CNew}: pₐᵥ*
   Calculate the average face normal point of all faces in F*_{CNew}: nₐᵥ,*
   Intersect *Pₐᵥ on M_{D}* using nₐᵥ
   Create a plane using the intersection point and normal:
*P_{T}*
end

### Experimental Results

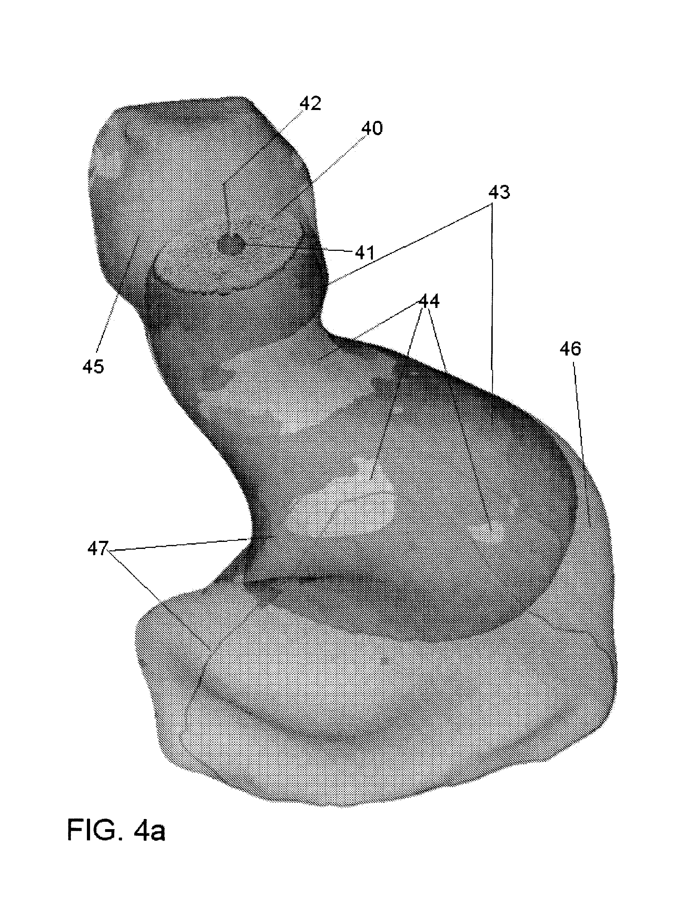

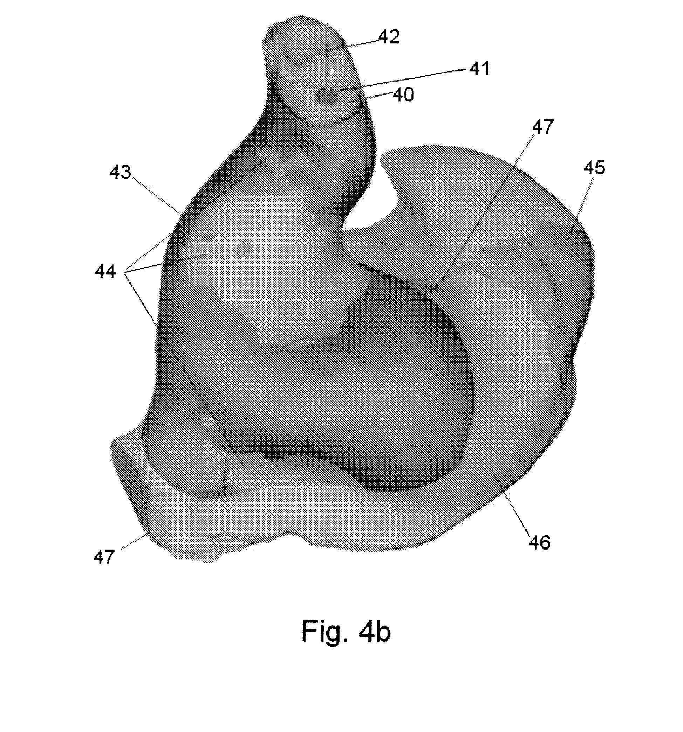

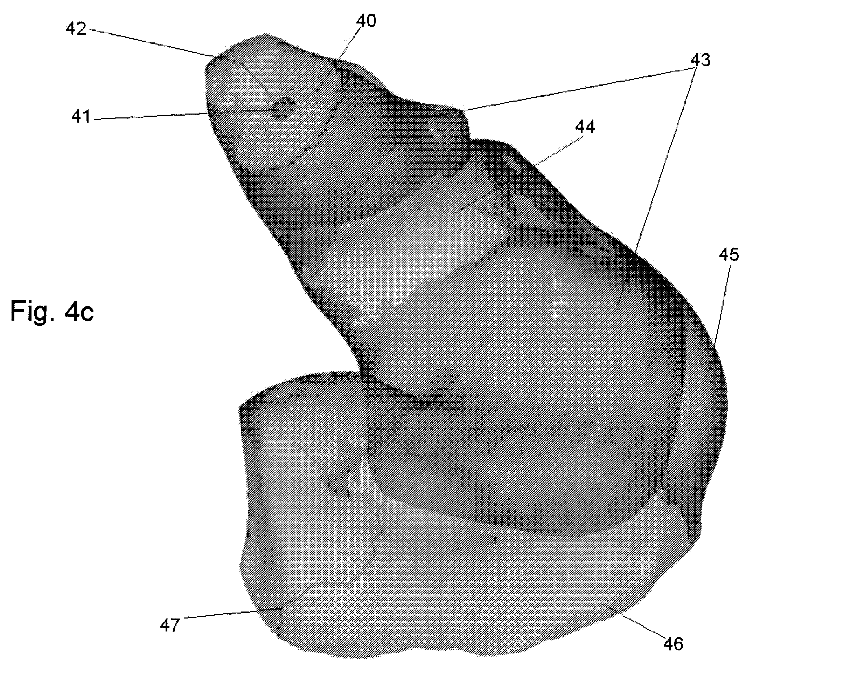

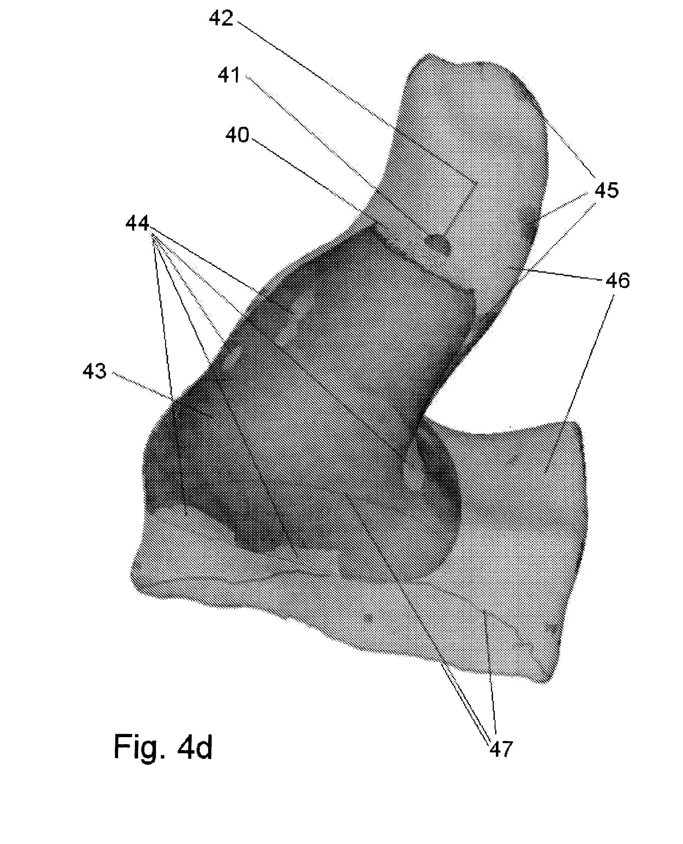

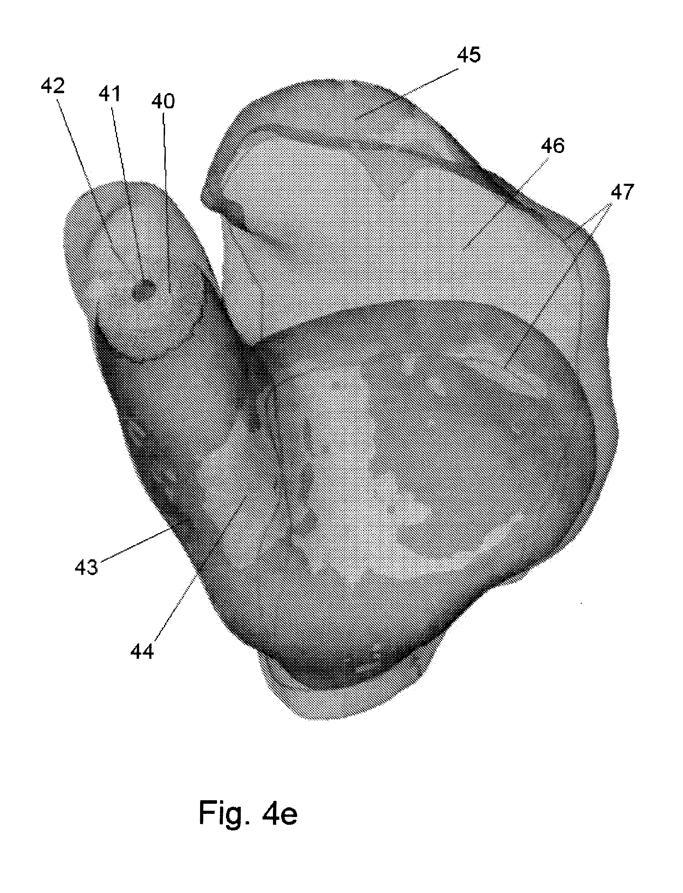

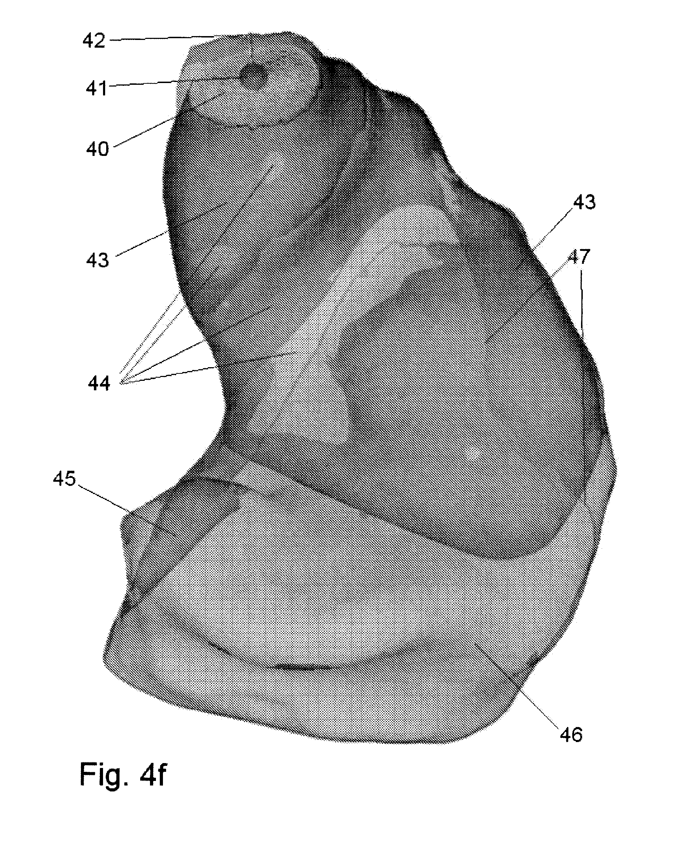

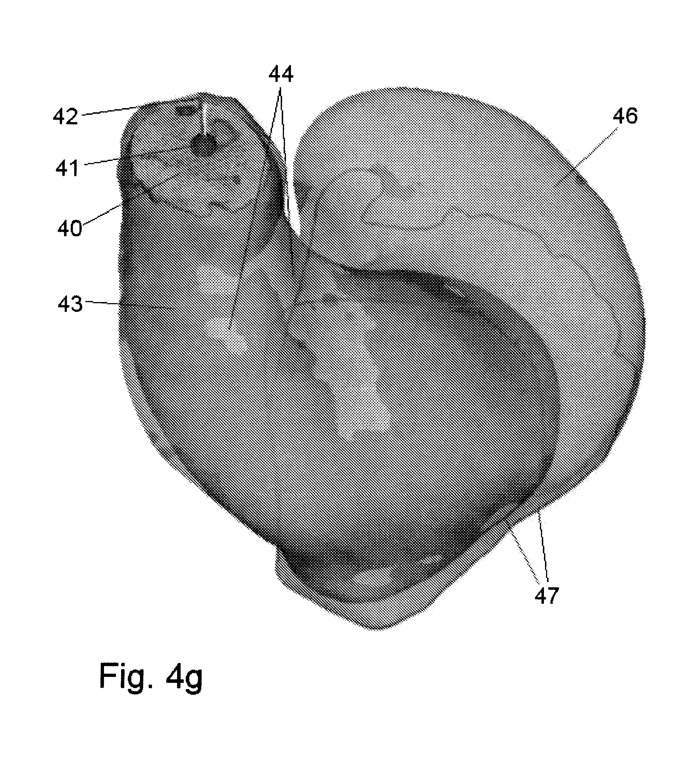

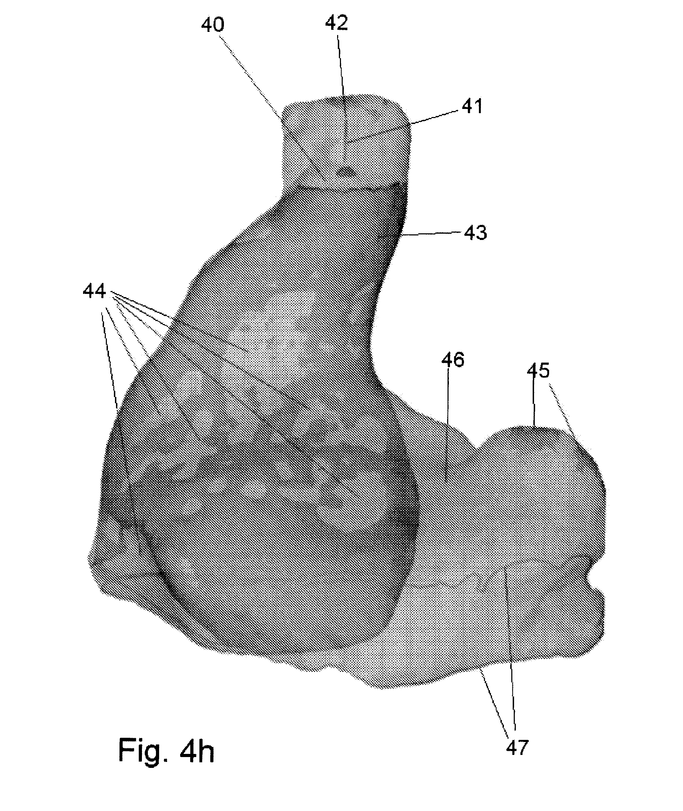

A method according to an embodiment of the invention has been used for automatic detailing and modeling of hearing aid shells. FIGS. 4(a)-(h) illustrate some detection results, including tip plane detection, tip plane area, and tip plane orientation. In each of the figures, reference number 41 is the intersection on the detailed impression, number 42 is the average face normal, number 43 is the detailed impression, number 44 indicates where the detailed impression comes out of the undetailed impression, numbers 45 and 46 are the undetailed impressions, and number 47 indicates the bottom opening of the undetailed impression.

### System Implementations

It is to be understood that embodiments of the present invention can be implemented in various forms of hardware, software, firmware, special purpose processes, or a combination thereof. In one embodiment, the present invention can be implemented in software as an application program tangible embodied on a computer readable program storage device. The application program can be uploaded to, and executed by, a machine comprising any suitable architecture.

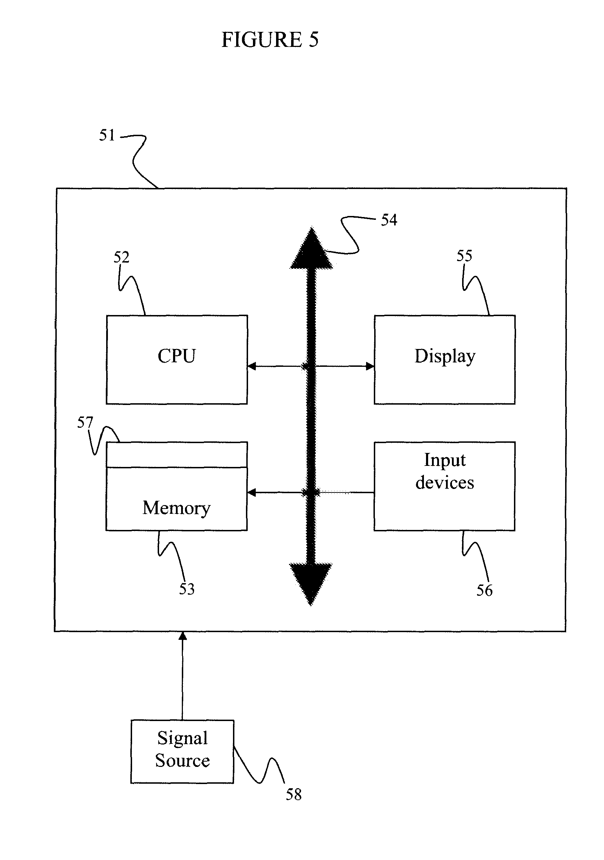

FIG. 5 is a block diagram of an exemplary computer system for implementing a method for identifying the tip plane of a 3D ear impression after detailing, according to an embodiment of the invention. Referring now to FIG. 5, a computer system 51 for implementing the present invention can comprise, *inter alia,* a central processing unit (CPU) 52, a memory 53 and an input/output (I/O) interface 54. The computer system 51 is generally coupled through the I/O interface 54 to a display 55 and various input devices 56 such as a mouse and a keyboard. The support circuits can include circuits such as cache, power supplies, clock circuits, and a communication bus. The memory 53 can include random access memory (RAM), read only memory (ROM), disk drive, tape drive, etc., or a combinations thereof. The present invention can be implemented as a routine 57 that is stored in memory 53 and executed by the CPU 52 to process the signal from the signal source 58. As such, the computer system 51 is a general purpose computer system that becomes a specific purpose computer system when executing the routine 57 of the present invention.

The computer system 51 also includes an operating system and micro instruction code. The various processes and functions described herein can either be part of the micro instruction code or part of the application program (or combination thereof) which is executed via the operating system. In addition, various other peripheral devices can be connected to the computer platform such as an additional data storage device and a printing device.

It is to be further understood that, because some of the constituent system components and method steps depicted in the accompanying figures can be implemented in software, the actual connections between the systems components (or the process steps) may differ depending upon the manner in which the present invention is programmed. Given the teachings of the present invention provided herein, one of ordinary skill in the related art will be able to contemplate these and similar implementations or configurations of the present invention.

While the present invention has been described in detail with reference to exemplary embodiments, those skilled in the art will appreciate that various modifications and substitutions can be made thereto without departing from the spirit and scope of the invention as set forth in the appended claims.

## Claims

1. A method of detecting the tip plane in digitized 3D ear impressions, the method comprising the steps of:
receiving a digitized mesh representation of an undetailed 3D ear impression and a digitized mesh representation of a detailed 3D ear impression;
finding faces on the detailed ear impression mesh that are modified with respect to corresponding faces on the undetailed ear impression mesh;
forming regions of connected modified faces;
eliminating those regions that are not around an ear canal; and
creating a tip plane by averaging vertices of those remaining faces in a tip region of the detailed impression to find a mass center point, averaging face normal vectors over all faces in said tip region to find an average face normal, and extending the average face normal from the mass center point to find the intersection on the detailed ear impression.

2. The method of claim 1, further comprising finding the tip plane normal from the intersection of the average face normal with the detailed ear impression, wherein the tip plane is the plane normal to the tip plane normal.

3. The method of claim 1, wherein the digitized mesh representation of the undetailed 3D ear impression and the digitized mesh representation of the detailed 3D ear impression each comprises a plurality of vertices that define a plurality of triangular faces.

4. The method of claim 3, wherein finding modified faces on the detailed ear impression comprises adding new vertices to the undetailed ear impression mesh, measuring distances between vertices of the detailed ear impression mesh and vertices of the undetailed ear impression mesh, finding a minimum distance between each face of the undetailed ear impression mesh and the each face of the detailed ear impression mesh, and classifying those faces whose minimum distance is greater than a pre-determined threshold as modified faces.

5. The method of claim 3, wherein eliminating those regions that are not around an ear canal comprises:
providing a tip point of the detailed ear impression mesh;
providing a bottom plane center point of the detailed ear impression mesh;
calculating a first distance between said tip point and said bottom plane center point; and
for each region,
calculating a mass center point for each face in the region by averaging all vertices of all faces in the region;
calculating a second distance between said mass center point and said bottom plane center point, and
adding the region of connected modified faces to a new region of connected modified faces if said second distance is greater than a product of said first distance and a predefined constant,
wherein said new region of connected modified faces is included in a new set of regions of connected modified faces.

6. The method of claim 5, further comprising, for each region in said new set of regions, and for each face in each said region,
calculating a face center point of each face,
calculating a third distance between said face center point and said said bottom plane center point, and
removing a region from said new set of regions if said third distance is less than a product of said first distance and a predefined constant.

7. The method of claim 1, wherein forming regions of connected modified faces comprises, for each modified face, selecting a current modified face, finding those modified faces that are neighbors of said current modified face, and adding the neighboring modified faces to a face set containing the current face.

8. A method of detecting the tip plane in digitized 3D ear impressions, the method comprising the steps of:
receiving a digitized mesh representation of an undetailed 3D ear impression and a digitized mesh representation of a detailed 3D ear impression, wherein each mesh representation comprises a plurality of vertices that define a plurality of triangular faces;
adding new vertices to the undetailed ear impression mesh;
measuring distances between vertices of the detailed ear impression mesh and vertices of the undetailed ear impression mesh;
finding a minimum distance between each face of the undetailed ear impression mesh and the each face of the detailed ear impression mesh;
classifying those faces whose minimum distance is greater than a pre-determined threshold as modified faces;
forming regions of connected modified faces;
eliminating those regions that are not around an ear canal; and
finding the tip plane in a region of connected modified faces near the ear canal tip.

9. The method of claim 8, wherein finding the tip plane in a region of connected modified faces near the ear canal tip comprises:
creating a tip plane by averaging vertices of those remaining faces in a tip region of the detailed impression to find a mass center point;
averaging face normal vectors over all faces in said tip region to find an average face normal;
extending the average face normal from the mass center point to find the intersection on the detailed ear impression; and
finding the tip plane normal from the intersection of the average face normal with the detailed ear impression, wherein the tip plane is the plane normal to the tip plane normal.

10. A program storage device readable by a computer, tangibly embodying a program of instructions executable by the computer to perform the method steps for detecting the tip plane in digitized 3D ear impressions, the method comprising the steps of:
receiving a digitized mesh representation of an undetailed 3D ear impression and a digitized mesh representation of a detailed 3D ear impression;
finding faces on the detailed ear impression mesh that are modified with respect to corresponding faces on the undetailed ear impression mesh;
forming regions of connected modified faces;
eliminating those regions that are not around an ear canal; and
creating a tip plane by averaging vertices of those remaining faces in a tip region of the detailed impression to find a mass center point, averaging face normal vectors over all faces in said tip region to find an average face normal, and extending the average face normal from the mass center point to find the intersection on the detailed ear impression.

11. The computer readable program storage device of claim 10, the method further comprising finding the tip plane normal from the intersection of the average face normal with the detailed ear impression, wherein the tip plane is the plane normal to the tip plane normal.

12. The computer readable program storage device of claim 10, wherein the digitized mesh representation of the undetailed 3D ear impression and the digitized mesh representation of the detailed 3D ear impression each comprises a plurality of vertices that define a plurality of triangular faces.

13. The computer readable program storage device of claim 12, wherein finding modified faces on the detailed ear impression comprises adding new vertices to the undetailed ear impression mesh, measuring distances between vertices of the detailed ear impression mesh and vertices of the undetailed ear impression mesh, finding a minimum distance between each face of the undetailed ear impression mesh and the each face of the detailed ear impression mesh, and classifying those faces whose minimum distance is greater than a pre-determined threshold as modified faces.

14. The computer readable program storage device of claim 12, wherein eliminating those regions that are not around an ear canal comprises:
providing a tip point of the detailed ear impression mesh;
providing a bottom plane center point of the detailed ear impression mesh;
calculating a first distance between said tip point and said bottom plane center point; and
for each region,
calculating a mass center point for each face in the region by averaging all vertices of all faces in the region;
calculating a second distance between said mass center point and said bottom plane center point, and
adding the region of connected modified faces to a new region of connected modified faces if said second distance is greater than a product of said first distance and a predefined constant,
wherein said new region of connected modified faces is included in a new set of regions of connected modified faces.

15. The computer readable program storage device of claim 14, the method further comprising, for each region in said new set of regions, and for each face in each said region,
calculating a face center point of each face,
calculating a third distance between said face center point and said said bottom plane center point, and
removing a region from said new set of regions if said third distance is less than a product of said first distance and a predefined constant.

16. The computer readable program storage device of claim 10, wherein forming regions of connected modified faces comprises, for each modified face, selecting a current modified face, finding those modified faces that are neighbors of said current modified face, and adding the neighboring modified faces to a face set containing the current face.
